Europäisches Patentamt

(19) European Patent Office

Office européen des brevets

(11) Numéro de publication : **0 300 910 B1**

(12) FASCICULE DE BREVET EUROPEEN

(45) Date de publication du fascicule du brevet :
05.06.91 Bulletin 91/23

(21) Numéro de dépôt : 88401893.8

(22) Date de dépôt : 21.07.88

(51) Int. Cl.⁵ : **F02M 37/22**, F02M 37/20, B01D 36/00

(54) **Dispositif de filtrage et de dégazage d'un carburant d'alimentation pour moteur à combustion interne.**

(30) Priorité : 22.07.87 FR 8710385

(43) Date de publication de la demande :
25.01.89 Bulletin 89/04

(45) Mention de la délivrance du brevet :
05.06.91 Bulletin 91/23

(84) Etats contractants désignés :
DE ES FR GB IT

(56) Documents cités :
EP-A- 0 152 042
DE-A- 3 540 260
FR-A- 2 544 021
FR-A- 2 580 190

(73) Titulaire : **RIVAPOMPE Société Anonyme dite:**
**6, Avenue Malvesin**
**F-92400 Courbevoie (FR)**

(72) Inventeur : **Constantinidis, Stéphane**
**26, rue Eugénie**
**F-93130 Taverny (FR)**
Inventeur : **Marye, Jean**
**14, rue de la Fontaine Quenette**
**F-78890 Garancières (FR)**

(74) Mandataire : **Ohayon, Joseph et al**
**Cabinet Jolly 54, rue de Clichy**
**F-75009 Paris (FR)**

Jouve, 18, rue Saint-Denis, 75001 PARIS

## Description

Dans les moteurs à combustion interne, il est nécessaire de filtrer et de dégazer le carburant d'alimentation avant de l'introduire dans le carburateur, afin d'en éliminer toutes les particules d'impuretés qui y sont en suspension, ainsi que les bulles de gaz et d'air qui se dégagent du carburant par suite de l'élévation de température dans l'enceinte contenant le moteur.

Jusqu'à présent, les constructeurs de voitures automobiles ont utilisé à cet effet deux dispositifs distincts, à savoir un filtre fin et un dispositif de dégazage avec ou sans tamis grossier disposés en série sur le circuit d'alimentation, entre la pompe à essence et le carburateur. Les filtres connus comprennent généralement un boîtier fixé sur le moteur et dans lequel est logée une cartouche filtrante. L'inconvénient d'un tel filtre est que sa cartouche filtrante doit être remplacée régulièrement avant qu'elle ne soit trop encrassée.

Par le brevet FR 2 580 190, on connaît un dispositif selon le préambule de la revendication 1, dans lequel le filtrage et le dégazage du carburant sont effectués dans un même boîtier. Mais, dans ce brevet, on suppose que tout le gaz arrivant avec le carburant traverse le cartouche filtrante et est évacué vers la tubulure de retour à travers le clapet, dès que celui-ci est soulevé par un excèdent de carburant se trouvant dans la cartouche, ce qui est faux car en raison du colmatage progressif de la cartouche, la majeure partie du gaz reste dans la chambre située à l'extérieur de la cartouche et ne peut en être évacuée. De plus, le dispositif selon ce brevet est incapable d'évacuer les gaz seuls puisque le clapet est taré pour être soulevé par le carburant liquide, les gaz s'échappant alors avec du carburant liquide.

Le brevet DE 3 540 260 remédie bien à cet inconvénient par l'utilisation d'un clapet qui, en position de repos, est appliqué sur un siège présentant des saillies qui définissent des passages à travers lesquels le gaz seul peut passer vers la tubulure de retour. Toutefois, l'échappement des gaz ne peut s'effectuer que lorsque le clapet est en position de repos, c'est-à-dire lorsque le dispositif ne fonctionne pas. Dès que la pompe débite, le clapet est soulevé contre un obturateur, de sorte que le passage des gaz est coupé.

La présente invention a pour but de remédier aux inconvénients des dispositifs de filtrage et de dégazage de la technique antérieure connue, et concerne à cet effet un dispositif de filtrage et de dégazage selon la partie caractérisante de la revendication 1.

D'autres caractéristiques de l'invention font l'objet des revendications suivantes.

Le dispositif selon l'invention permet donc de regrouper en une seule unité les deux fonctions de filtrage et de dégazage, et de gagner ainsi une place précieuse autour du moteur. Le dispositif selon l'invention peut être fixé à la place du filtre à essence traditionnel.

La cuve et le corps de couvercle peuvent être réalisés en un matériau résistant et bon marché, par exemple en une matière synthétique résistante aux hydrocarbures. Ils pourront alors être soudés entre eux de manière à assurer une bonne étanchéité de l'enceinte intérieure. En variante, la cuve peut être réalisée en matériau métallique, et sertie d'une manière étanche sur le corps. Le choix d'un matériau métallique conducteur ou synthétique isolant de la chaleur ambiante dépend de la configuration du moteur ou du véhicule.

Comme cartouche filtrante, on pourra utiliser un papier standard du commerce. Il en résulte que l'on pourra fabriquer le dispositif selon l'invention à un prix suffisamment bas pour que l'on puisse le jeter et le remplacer par un dispositif neuf, dès que sa cartouche filtrante est encrassée.

Un mode de réalisation de l'invention sera à présent décrit en regard des dessins annexés dans lesquels :

La figure 1 est une vue en coupe selon un plan diamétral du dispositif de filtrage et de dégazage;

La figure 2 est une vue à plus grande échelle d'un détail de la figure 1 ;

La figure 3 est une vue en coupe suivant la ligne III-III de la figure 1 ; et

La figure 4 est une vue en coupe suivant la ligne IV-IV de la figure 2.

Le dispositif illustré sur les figures comprend un boîtier formé d'une cuve de décantation 10 et d'un corps de couvercle creux 12, avantageusement réalisés en une matière synthétique résistant aux hydrocarbures. La cuve peut également être en métal. La cuve et le corps de couvercle sont soudés bord à bord, par exemple par le procédé par rotation, ou sertis dans le cas d'une cuve métallique.

La cuve présente en son fond des nervures 14 sur lesquelles repose un filtre désigné dans son ensemble par la référence 16. Le filtre comprend une paroi latérale cylindrique 18 en papier filtrant de faible porosité, avantageusement pliée en accordéon pour en augmenter la surface latérale, et qui est coiffée à ses extrémités par deux flasques 20, 22 fixés hermétiquement.

Avec le corps de couvercle viennent de moulage une tubulure d'arrivée 24 pour le carburant qui est refoulé par la pompe à essence et une tubulure de sortie 26 reliée au carburateur. La tubulure d'arrivée est dirigée radialement vers l'axe du dispositif, tandis que la tubulure de sortie est disposée selon ledit axe, et elle se prolonge intérieurement par une canule 28 qui traverse avec étanchéité le flasque supérieur 20 du filtre et plonge jusqu'à une faible distance au-dessus du flasque inférieur 22. La canule traverse le flasque supérieur en son centre et de ce fait elle maintient le filtre en position coaxiale par rapport aux parois latérales de la cuve et du corps de couvercle.

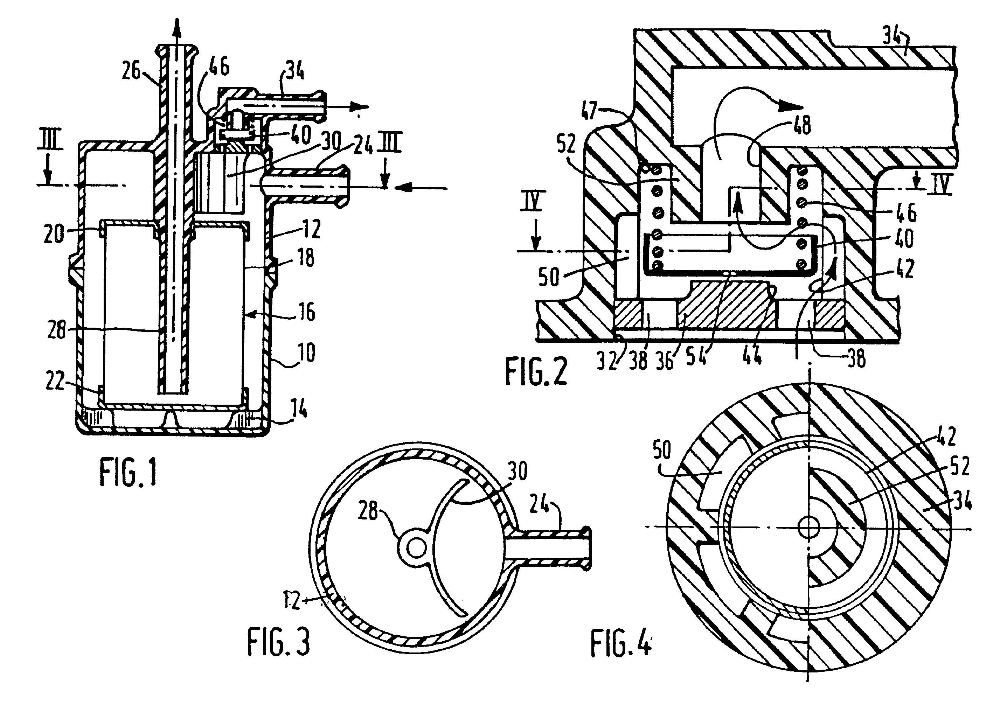

Sur la partie de la canule située au-dessus du filtre vient de moulage un déflecteur 30 de forme concave (voir également la figure 3), dont la concavité est tournée vers la tubulure d'arrivée 24, de manière que le jet incident du carburant vienne s'y briser.

Le corps de couvercle comprend également à sa partie la plus haute un orifice 32 autour duquel vient de moulage une tubulure 34 pour le retour du carburant ou du gaz vers le réservoir. Cet orifice est obturé par une plaquette 36 percée de trous 38 pour le passage du carburant vers la tubulure de retour 34. La plaquette sert de siège pour un clapet 40, en position ouverte, qui dans la figure 2, est réalisé sous forme de coupe, mais qui peut avoir toute autre forme appropriée. Le clapet peut se débattre dans un alésage cylindrique 42 d'axe vertical et de diamètre adapté à celui du clapet. Il est normalement appliqué contre une saillie 44 formée sur la face supérieure de la plaquette, par un ressort précontraint 46. Celui-ci prend appui d'autre part dans une gorge circulaire 47 formée autour d'une portion tubulaire 52 servant de second siège pour le clapet, lorsque celui-ci est repoussé vers le haut par le carburant liquide, comme on l'expliquera par la suite. L'alésage 48 de la portion tubulaire 52 communique avec la tubulure de retour 34. L'alésage 42 présente une pluralité de rainures axiales 50 de longueur telle que lorsque le clapet est appliqué sur la saillie 44, une communication de section constante subsiste entre les trous 38 et l'alésage 48, par l'intermédiaire des rainures.

Le clapet présente en son centre un petit trou calibré 54 par lequel un faible débit de fuite de carburant liquide peut s'échapper lorsque le clapet est dans sa position haute.

On expliquera à présent le fonctionnement du dispositif de filtrage et de dégazage selon l'invention : le mélange carburant liquide et gaz arrive par la tubulure d'arrivée 24 au-dessus du filtre 16 et se heurte au déflecteur 30. Il se produit à ce niveau une première séparation entre la phase liquide et la phase gazeuse du carburant. Le gaz remonte vers la paroi supérieure du corps de couvercle, tandis que le carburant liquide descend lentement le long de la paroi du papier filtre 18 qu'il traverse pour pénétrer à l'intérieur du filtre. Dans cette deuxième phase, il abandonne à l'extérieur du filtre :

— les bulles de gaz encore en suspension qui remontent vers le sommet du boîtier,
— l'eau éventuelle qui se décante dans la cuve, et
— les impuretés solides diverses qui se déposent sur le papier filtrant et sous le flasque inférieur du filtre.

C'est une essence considérablement ralentie et dégazée qui vient remplir le fond du filtre, d'où elle est refoulée par la canule 28 vers le carburateur.

Pendant ce temps, la couche de gaz qui s'est formée à la partie supérieure du boîtier, s'échappe normalement vers la tubulure 34 de retour au réservoir, en passant par les trous 38, puis en contournant, par l'intermédiaire des rainures 50, le clapet qui est alors maintenu appliqué contre son siège 44 par le ressort taré 46 et enfin à travers l'orifice de retour 48.

Lorsque tout le gaz a été évacué, l'essence qui continue à arriver emplit tout le boîtier, et cherche à s'échapper par le même chemin que le gaz. Mais en raison de sa viscosité relativement élevée, elle n'arrive pas à s'écouler, les rainures 50 lui opposant une grande résistance (perte de charge). La pression du carburant liquide augmente jusqu'au moment où celui-ci soulève le clapet 40 à l'encontre de la force du ressort 46, et l'applique contre la butée annulaire 52. L'orifice de retour 48 est alors obturé. Le débit de carburant vers le réservoir est limité par le calibrage du trou central 54. Ce débit crée en aval du clapet une perte de charge qui maintient le clapet fermé.

Le clapet ne pourra se rouvrir que lorsque l'action du ressort contrebalancera la pression qui s'exerce sur lui. Ceci se produira lorsqu'un matelas d'air d'épaisseur suffisante se sera reformé sous le clapet. Celui-ci reviendra alors à sa position ouverte et une nouvelle phase de dégazage se produira.

En résumé, le passage résiduel formé lorsque le clapet est en position ouverte doit permettre au gaz de s'écouler sans donner naissance à une perte de charge, tandis que le carburant liquide doit créer une perte de charge. On pourra déterminer la section de passage en utilisant un clapet échantillon ayant des mesures approchées.

## Revendications

1. Dispositif monobloc de filtrage et de dégazage d'un carburant d'alimentation pour moteur à combustion interne, du type constitué par un boîtier étanche comprenant d'une part, une cuve de décantation (10) qui contient une cartouche filtrante (16) pourvu d'une paroi cylindrique (18) en papier filtrant de faible porosité, fermée à ses extrémités, et d'autre part, un corps de couvercle (12) fixé de façon étanche sur la cuve de décantation, et pourvu d'une tubulure d'arrivée de carburant (24) débouchant à l'extérieur de la cartouche filtrante, d'une tubulure de sortie de carburant (26) qui pénètre à l'intérieur du filtre et plonge jusqu'à une faible distance du fond de la cartouche filtrante, et d'une tubulure (34) de retour au réservoir des gaz dans laquelle est monté un clapet (40), caractérisé en ce que ladite tubulure de retour (34) débouche à l'extérieur de la cartouche filtrante (16) et en ce qu'un ressort taré (46) maintient le clapet (40) normalement en position ouverte tant que la cuve de décantation contient du gaz, celui-ci s'échappant vers la tubulure de retour au réservoir (34) à travers un passage (50) à faible perte de charge qui by-passe le clapet, tandis que, lorsque la cuve de décantation est entièrement emplie de carburant liquide, la pression exercée par celui-ci sollicite le clapet à l'encontre de la force du ressort (46), vers une position de fermeture où il obture la tubulure (34) de retour vers le réservoir.

2. Dispositif selon la revendication 1, caractérisé en ce que le clapet (40) est percé d'un orifice calibré (54) par lequel un débit calibré de fuite de carburant liquide peut passer vers la tubulure de retour (34), lorsque le clapet est en position de fermeture.

3. Dispositif selon la revendication 1, caractérisé en ce que l'entrée de la tubulure de retour (34) est obturée par une plaquette (36) percée de trous (38) et pourvue sur sa face supérieure d'une butée (44) qui définit la position ouverte du clapet, celui-ci pouvant se débattre dans un alésage axial (42) de diamètre légèrement supérieur à celui du clapet et sur lequel sont formées des rainures longitudinales (50) de faible section de passage qui établissent une communication entre les trous (38) de la plaquette (36) et la tubulure de retour (34), autour du clapet appliqué sur la butée (44).

4. Dispositif selon la revendication 1, caractérisé en ce que dans sa position de fermeture, le clapet (40) s'applique contre un siège annulaire (52) percé d'un orifice (48) qui communique avec la tubulure de retour (34), l'orifice calibré (54) du clapet étant alors situé en regard dudit orifice.

5. Dispositif selon l'une des revendications 1 et 4, caractérisé en ce que le ressort taré (46) prend appui sur le clapet et dans une gorge annulaire (47) formée autour du siège annulaire (52).

6. Dispositif selon la revendication 1, caractérisé en ce que le corps de couvercle (12) est creux, en ce que la tubulure d'arrivée de carburant (24) débouche à l'intérieur du corps de couvercle selon la direction radiale du boîtier, tandis que la tubulure de sortie de carburant (28) s'étend selon l'axe du boîtier et en ce que sur la partie de la tubulure de sortie qui est située au-dessus du filtre, et qui se trouve en regard de la tubulure d'arrivée (24), vient de moulage une surface déflectrice concave (30) sur laquelle vient se briser le jet de carburant qui pénètre dans le boîtier.

**Ansprüche**

1. Aus einem Stück gebildete Vorrichtung zum Filtrieren und zum Entgasen eines Versorgungskraftstoffes für Verbrennungsmotoren, bestehend aus einem dichten Gehäuse, das einerseits ein Absitz- oder Klärgefäß (10), das einen mit einer Zylinderwand (18) aus Filterpapier schwacher Porosität versehenen Filtereinsatz (16), der an seinen Enden geschlossen ist, und andererseits einen Abdeckkörper (12) aufweist, der abdichtend am Absitzgefäß befestigt und mit einem Kraftstoff-Zuführstutzen (24), der von dem Filtereinsatz nach außen mündet, einen Kraftstotf-Auslaßstutzen (26), der ins Innere des Filters dringt und bis auf einen geringen Abstand zum Boden des filtereinsatzes vordringt, und einem Rücklaufstutzen (34) zum Gastank versehen ist, in das ein Klappenventil (40) eingesetzt ist, dadurch gekennzeichnet, daß der Rückführstutzen (34) vom Filtereinsatz (16) nach außen mündet und daß das Klappenventil (40)von einer geeichten Feder (46) gehalten wird, das normalerweise geöffnet ist, wenn das Absitzgefäß Gas enthält, das in Richtung auf den Rückführstutzen (34) zum Tank über einen das Klappenventil umgehenden Durchgang (50) mit geringem Gefällverlust entweicht, während, wenn das Absitzgefäß vollkommen mit flüssigem Kraftstoff gefüllt ist, der durch ihn ausgeübte Druck das Klappenventil gegen die Kraft der Feder (46) eine Schließstellung einnehmen läßt, in der der Rückführstutzen (34) zum Tank geschlossen wird.

2. Vorrichtung nach Anspruch 1, dadurch gekennzeichnet, daß das Klappenventil (40) von einer kalibrierten Öffnung (54) durchbohrt ist, durch die hindurch eine kalibrierte Ausströmmenge flüssigen Kraftstoffs zum Rückführstutzen (34) hinströmen kann, wenn das Klappenventil in Schließstellung ist.

3. Vorrichtung nach Anspruch 1, dadurch gekennzeichnet, daß der Einlaß des Rückführstutzens (34) durch eine Platte (36) abgeschlossen ist, die mit Löchern sowie auf ihrer oberen fläche mit einem Anschlag (44) versehen ist, der eine Öffnungsstellung des Klappenventils bestimmt, das in einer Bohrung (42) mit einem Durchmesser, der geringfügig über dem des Klappenventils liegt, ausschwenken kann, auf der Längsrinnen (50) von kleinem Durchgangsquerschnitt gebildet sind, durch die zwischen den Löchern (38) und der Platte (36) um das am Anschlag (44) angelegte Klappenventil herum eine Verbindung hergestellt werden.

4. Vorrichtung nach Anspruch 1, dadurch gekennzeichnet, daß das Klappenventil (40) sich in seiner Schließstellung an einen Ringsitz (52) anlegt, der mit einer Öffnung (48) versehen ist, die mit dem Rückführstutzen in Verbindung steht, wobei die kalibrierte Öffnung (54) des Klappenventils dann der Öffnung gegenüber liegt.

5. Vorrichtung nach einem der vorhergehenden Ansprüche 1 und 4, dadurch gekennzeichnet, daß die geeichte feder (46) am Klappenventil und in einer um den Ringsitz (52) gebildeten ringförmigen Auskehlung (47) gehalten wird.

6. Vorrichtung nach Anspruch 1, dadurch gekennzeichnet, daß der Abdeckkörper (12) hohl ist, daß der Kraftstoff-Zuführstutzen (24) ins Innere des Abdeckkörpers in Übereinstimmung mit der Radialrichtung des Gehäuses mündet, während der Kraftstoff-Auslaßstutzen (26) längs der Gehäuseachse verläuft, und daß auf dem Teil des Auslaßstutzens, der über dem Filter und gegenüber dem Zuführstutzen (24) liegt, eine konkave Ablenkfläche (30) geformt ist, auf der sich der in das Gehäuse eindringende Kraftstoffstrahl bricht.

## Claims

1. A one-piece device for filtering and degassing a fuel supply to an internal-combustion engine, of the type formed by a sealed housing comprising, as a first portion, a decanting chamber (10) which contains a filter cartridge (16) provided with a cylindrical wall (18) of low-porosity filter paper and closed at its ends and, as a second portion, a cover body (12) which is fixed in a sealed manner on the decanting chamber and which is provided with an fuel-inlet pipe (24) discharging externally of the filter cartridge, a fuel-outlet pipe (26) which penetrates into the interior of the filter down to within a short distance from the bottom of the filter cartridge, and a return pipe (34) to the gas reservoir, a valve (40) being mounted in the return pipe, characterised in that said return pipe (34) discharges externally of the filter cartridge (16) and in that a preloaded spring (46) normally retains the valve (40) in the open position as long as the decanting chamber contains gas, the latter escaping towards the return pipe (34) to the reservoir through a passage (50) having a low pressure drop, which by-passes the valve, whereas when the decanting chamber is entirely filled with liquid fuel, the pressure exerted thereby urges the valve against the force of the spring (46), into a closed position in which it shuts off the return pipe (34) to the reservoir.

2. A device according to claim 1, characterised in that the valve (40) is provided with a calibrated orifice (54) through which a calibrated flow of escaping liquid fuel can pass into the return pipe (34), when the valve is in the closed position.

3. A device according to claim 1, characterised in that the inlet of the return pipe (34) is shut off by a disc (36) pierced with holes (38) and provided on its upper surface with an abutment (44) which defines the open position of the valve, the latter being adapted to extend into an axial bore (42) of a diameter which is slightly larger than that of the valve and along which are formed longitudinal channels (50) of small passage cross-section and which provide a communication between the holes (38) in the disc (36) and the return pipe (34), around the valve applied against the abutment (44).

4. A device according to claim 1, characterised in that in its closed position the valve (40) is applied against an annular seating (52) pierced by an orifice (48) which communicates with the return pipe (34), the calibrated orifice (54) of the valve being then disposed opposite said orifice.

5. A device according to either claim 1 or 4, characterised in that the preloaded spring (46) bears against the valve and in the annular groove (47) formed around the annular seating (52).

6. A device according to claim 1, characterised in that the cover body (12) is hollow, in that the fuel-inlet pipe (24) discharges into the interior of the cover body in the radial direction of the housing, whereas the fuel-outlet pipe (28) extends along the housing axis, and in that a concave moulded deflector surface (30) is provided on the part of the outlet pipe which is disposed above the filter and which is situated opposite the inlet pipe (24), the jet of fuel entering the housing striking against said deflector surface.

FIG.1

FIG.2

FIG.3

FIG.4

EP 0 300 910 B1